# EUROPEAN PATENT SPECIFICATION

(11) **EP 2 495 945 B1**
(45) Date of publication and mention of the grant of the patent: **02.09.2020**
(21) Application number: 10826134.8
(22) Date of filing: 27.10.2010
(51) Int. Cl.: H04M 3/42, H04M 3/22, G07C 1/00, G06Q 10/06, G07C 1/10, H04M 3/38, H04M 7/12

(54) **REMOTE SYSTEM FOR MONITORING THE PRESENCE OF WORKERS**
SYSTEM ZUR FERNÜBERWACHUNG DER ANWESENHEIT VON MITARBEITERN
SYSTÈME DISTANT DE CONTRÔLE DE PRÉSENCE DE TRAVAILLEURS

(30) Priority: 28.10.2009 ES 200902051
(43) Date of publication of application: 05.09.2012
(73) Proprietor: Peixe Software, Slne, 36201 Vigo- Pontevedra (ES)
(72) Inventor: SOSPEDRA ROCA, Francisco Javier, 36201 Vigo- Pontevedra (ES)
(74) Representative: Sahuquillo Huerta, Jesús
(86) International application number: PCT/ES2010/000435
(87) International publication number: WO 2011/051513

(56) References cited:
- EP-A1- 1 528 778
- WO-A1-95/20286
- GB-A- 2 442 277
- JP-A- H0 483 458
- US-A1- 2004 243 431
- US-A1- 2006 233 328

## Description

### Object of the invention

The invention refers to an system for monitoring the presence of workers, of the type which comprises a device which states at which time does each worker enter and exit the workplace, linked to a computer where a software program manages a database that records which worker has entered or exited the place, as well as the time when this event has occurred, in order to carry out the timetable management of each worker, as well as other statistic management, or any data referred to the each worker's salary.

More specifically, this system is intended for cleaning companies, or those which provide health or social assistance home services, and generally, for those sectors which require a full knowledge on the presence / absence and / or punctuality of the workers of a service, which provide their services in different locations where it is not possible to implement a classic-type marking system, such as a card or a biometric system.

### Background

Traditional presence control systems use card readers as marking devices, either magnetic or with a bar code, or footprint readers and other similar devices. These systems are usually located at the entrance door of the location where the work is carried out.

When the workers are spread in different workplaces, located in different spots or remote geographic locations, it is not possible to implement a traditional control system. In some cases, a telephone call is made by the worker from his /her workplace to the operator of a switchboard in charge of timetable control. Telephone calls, either at the expense of the receiving or the calling unit, imply a significant increase of the telephone costs by the contracting party. On the other hand, this system, besides not being reliable and being unable to be automated, can be sabotaged by employees or by third parties, if successive calls are made which keep the operator or the line occupied.

Therefore, it was necessary to have a remote presence control system which can be set up by cleaning companies, or health or social assistance companies, whose workers perform their work in different and distant locations, which was automated and which would not imply an increase in the costs when compared to other conventional systems due to the costs of telephone communications.

The document US 2004/243431 discloses a computer system includes hardware for interfacing with the public telephone network and for accepting incoming telephone calls. The computer system detects from the incoming telephone calls automatic number identification data (ANI data), such as Caller-ID data, which identifies the calling telephone and further accepts personal identification codes from the caller. The system generates reports of the incoming telephone calls in which reports the location of the calling telephone is correlated with the person who is making the telephone call. Preferably, the system is applied for recording remotely, through the telephone network, the arrival and departure times of field-based employees at various work sites.

The document EP1528778 relates to a method to set up an Internet Protocol session from a remote terminal via a remote access server using a telephone network being able to send calling line identity information. Furthermore, it is related to a computer readable medium having a computer program recorded thereon, the computer program comprising codes adapted to perform steps of said method to set up an Internet Protocol session when said computer program is run on a computer possibly being said remote access server. It is also related to a computer readable medium having a computer program recorded thereon, the computer program comprising codes adapted to perform steps of said method to set up an Internet Protocol session when said computer program is run on a remote terminal.

Finally, document GB2442277 discloses a method of configuring Internet telephony services for a private branch exchange (PBX) comprising: providing the requirements for the private branch exchange to an Internet Telephony Service Provider (ITSP); establishing, at the Internet telephony service provider, configuration data for the requirements; providing the established configuration data to the private branch exchange; and processing the established configuration data at the private branch exchange. It provides a technique for the automated or dynamic configuration of ITSP services for a PBX. This provides for the dynamic configuration of Voice Over IP (VoIP) trunks for at least one PBX, preferably SIP (Session Initiation Protocol) trunks. The embodiments of the invention may be implemented in an environment where an enterprise having a PBX system intends to take advantage of the services provided by an ITSP which offers an Internet data service for making telephone calls using VoIP.

However, no one of the known documents in the prior art discloses a system according with the claim 1 of the invention.

### Description of the invention

In order to solve these problems, the system of the invention has been set up, which uses a telephone in the workplace where the worker performs his / her work as a control device of the access and exit of the worker from his / her workplace, through which he / she makes a call at the time of entering the workplace and another call at the time he / she leaves the workplace. This call is made to a telephone line implemented in a switchboard, where the usual dialling tone has been replaced by a voice, so that the employees which are the object of control receive a reply voice on the dialling tone, without setting up the call, what is commonly known as making a "lost call", thus avoiding the cost of call set up, which will not be charged to the company which performs the control or to the holder of the calling telephone line.

The unique identification of the employee in the system is made through the recognition of the calling and called telephone numbers, which are included in a switchboard where the telephone calls made by the workers are received, which is connected to a server via a communication port. Both telephone numbers are recorded, as well as the date and time of the call-in order to set up the identification of the employee and its entrance / exit of the working post.

A second choice, obviously more advanced than the one described above, permits an identification of the user through a code dialled after he / she makes the call and on the dialling tone. Similarly, to what has been stated above, data flow between the calling and the called telephone numbers is without picking up the phone, and in the following sequence:
- The employee starts a calling process from the landline telephone located in his / her workplace.
- Without picking up the telephone, the IP switchboard issues a message on the dialling tone, requesting a code to be entered.
- The employee enters the code through the telephone.
- The switchboard replies to the employee with a suitable message, e.g.; "code received ...".

All this process is done without setting up the call, namely without added costs for the employer or for the company which controls this service. Furthermore, this choice makes it possible to provide the service with a single telephone number in the switchboard to all the clients of the different employers, thus implying a great reduction in the costs.

In order to develop this system, an IP Telephone Programmable Switchboard is used which, unlike traditional analogic switchboards, permits to "disassemble" by layers all the information which flows in a telephone call, so that when a user with a SOURCE number calls a DESTINATION number managed by this SWITCHBOARD, a data traffic is set under SIP Protocol (Session Initiation Protocol), aimed to make source and destination available to dialogue. As a result of this SIP flow, a new dialogue is set under RTP Protocol (Real Time Transport Protocol), which permits the transmission of signals such as the DIALING TONE, ENGAGED TONE, OPERATOR MESSAGES, or such as "network overload" or "the number dialled does not exist". In this system, a modified message is inserted, in order to make it intelligible to the user or the employee, such as "CALL RECORDED. THANK YOU." The fact of controlling at every time the flow of events makes it possible to keep an open channel between SOURCE and DESTINATION which is "RTP OPEN", thus permitting the flow of multimedia messages in either sense (voice messages such as "ENTER YOUR CODE"), or DTMF tones, which can be interpreted by this type of switchboard, and through its associated software, it can transform the control performed into related data.

In the computing unit which performs both as computer and as Internet server, a computing application has been implemented which includes a database which records the calls made from different landline telephones located in the corresponding workplaces, and to the corresponding telephone line of those included in the switchboard to which it has been made, as well as the date and time of the call; subsequently, and according to these data, it can determine to which worker does each call correspond, where is he / she performing his / her work and the time spent at the workplace. This application also performs the statistic and timetable control tasks of each worker and makes them available to the employer via the internet. To this aim, this server is connected to this network, thus allowing every employer to check the status of all his / her employees.

In some specific cases, an identity control of the worker is implemented, thus permitting to set up and record in these cases the telephone calls, or at least a percentage of them set by the employer, so that, through a supplementary voice recognition program from a previous voice recognition of all the workers subscribed to this control system, it can identify the worker and relate it to the telephone line from which the call is made.

Moreover, it is possible to set up a warning generation system, to which a related minimum timetable is attached, which must be fulfilled at every workplace, with the management program recording the absences in calls from every landline telephone where the worker should have made a call from, or their delay, then generating a warning which the server transmits to the employer via email and / or SMS which reports on such event.

According to the invention, the switchboard receiving the calls from the workers has a dynamic number of lines, set on a daily basis according to semiautomatic devices of loading analysis, so that the systems features the advantage that it is never fully engaged, namely, if the possibility that 30 people call at the same time actually exists, the system is customized to be capable of managing 30 lines at the same time.

### Description of the drawings

In order to complement the description, which is currently being carried out, and to make it easier to understand the features of the invention, a set of drawings is attached to this specification where, without limitation, the following issues have been represented:

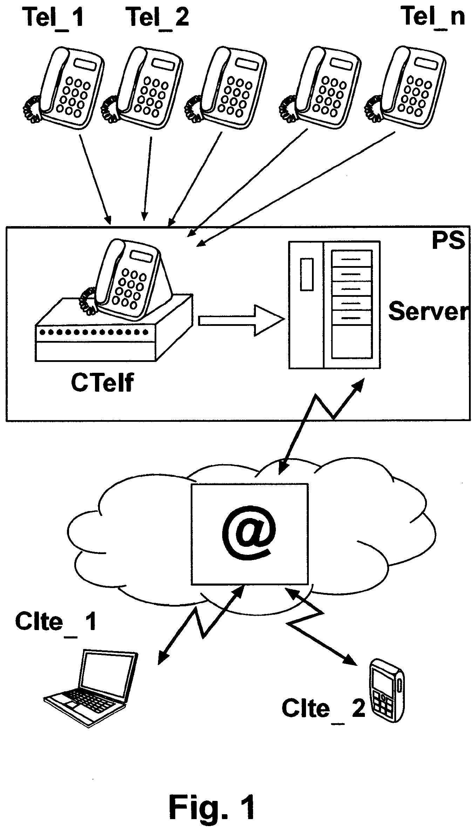

FIG. 1 shows a scheme of the implementation of the presence control system which is the object of this invention.

### Preferred embodiment of the invention

The system of this invention has three stages:
- A series of landline telephones (Tel_1, Tel_2 .... Tel_n) which correspond to the telephones of the locations where the employees of several employers are working, identified in the attached scheme as (Clte_1, Clte_2 ...).
- A supplier of the service (PS) where the system is implemented, which requires a switchboard (CTelf) and a computer with the functions of an internet server (Server).
- A series of clients (Clte_1, Clte_2 ...), employers of employees which work in different and distant locations, which manage the control of their employees by means of a utility which may be accessed via the Internet (@), supplied by the supplier of the service (PS).

The presence control system is implemented in the service supplier (PS) and consists on a switchboard (CTelf), with multiple telephone lines, where calls are received from the different landline telephones which identify the house or the location where the worker must work at that specific time.

The above referred switchboard preferably features a dynamic number of lines, and is connected to a computer (Server) where an application has been implemented which, besides managing the control of the employees, records the following data:

```
                  <calling telephone number><called telephone number>
                                <date and time of the call>
```

With these data, a unique relationship is established which identifies the worker with a specific location. The workplace is identified by the calling telephone, and the worker by the number to which he / she calls. More than one worker can be allocated the same telephone number in the call reception switchboard, as it is evident that a person cannot be working at the same time, or in the following minutes, in two different locations. Consequently, the same identifier can be used for a worker in Pontevedra and for another one in Barcelona, understanding that he / she cannot be in two working spots in a term of a few hours.

The analysis of this information makes it possible to determine the fulfilment of the service, about the timetable and punctuality, according to the scheming agreed by both parties. Thus, it allows to issue warnings for failure to comply, and their automated communication to the corresponding employer (Clte_1, Clte_2, ...) either by e-mail and / or SMS.

In the switchboard (CTelf) where the calls made from the telephones (Tel_1, Tel_2, ...) are received, the usual dialling tone has been replaced by a voice message, so that the employees which are the object of control receive a reply message on the dialling tone, without setting the call, and therefore, no related telephone costs exist.

The possibility has been envisaged to identify the user through a code dialled after the call, and on the dialling tone. In this case, once the employee starts a calling process from the landline telephone of his I her workplace, and without picking up the phone, the IP switchboard (CTelf) issues a message on the dialling tone, which requests the employee to enter a code, so that, once it has been received, the switchboard replies with a suitable message.

In order to develop this system, IP Telephone Programmable Switchboards are used, which permit to "disassemble" by layers all the information which flows in a telephone call, so that when a user with a SOURCE number calls a DESTINATION number managed by this SWITCHBOARD, a data traffic is set under SIP Protocol (Session Initiation Protocol). As a result of this, a new dialogue is set under RTP Protocol (Real Time Transport Protocol), which permits the transmission of signals such as the DIALING TONE, ENGAGED TONE and OPERATOR MESSAGES without making the call. In this system, a modified message is inserted, such as "CALL RECORDED. THANK YOU."

If a specific employer (Clte_1) wishes to confirm the identity of a worker in a specific workplace, as some contracts specify that the client agrees a specific technical profile and consequently, it cannot be supplanted by another worker, telephone calls are received and a supplementary application performs a voice recognition which permits the identification of the person, and it relates it to the telephone number from which he / she is calling, and consequently, to the specific workplace.

Once the nature of the invention has been sufficiently described, as well as an example of a preferred embodiment, for the required purposes, it is stated that the materials, shape, size and disposition of the elements described might be modified, as long as it does not imply an alteration of the essential features of the invention which are claimed below.

## Claims

1. A system for remotely monitoring the presence of workers, the system comprising:
a) a plurality of landline telephones (Tel_1, Tel_2, ..., Tel_n) through which a worker makes a telephone call when the worker enters a respective workplace, and another call at the time of leaving the workplace; wherein each one of the landline telephones (Tel_1, Tel_2, ..., Tel_n) is placed in different workplaces where workers are working;
b) a switchboard (CTelf) connected to a server via a communication port, wherein the server is configured to function as an internet server, and wherein the switchboard (CTelf) is connected to the plurality of landline telephones (Tel_1, Tel_2, ..., Tel_n) configured to receive the calls made by the worker;
wherein the switchboard (CTelf) is configured to receive and record the calls in a database implemented in the server connected to the switchboard (CTelf), the recorded calls including the calling telephone number, the called telephone number, and the date and time of the received call;
the system for remotely monitoring the presence of workers being **characterized in that**
the switchboard (CTelf) is an IP programmable switchboard which is configured to, during the time of a call setup and before completing the call setup of an incoming call, to set a data traffic under Session Initiation Protocol, SIP, and a dialogue under Real Time Transport Protocol, RTP, and/or Dual-tone Multi-Frequency Protocols, DTMF, wherein the switchboard (CTelf) is further configured to transmit a voice message replacing the dialling tone without setting up the incoming call to the landline telephone (Tel_1, Tel_2, ..., Tel_n) that performs the incoming call;
and wherein said voice message is intelligible to the worker making the call;
and wherein the switchboard (CTelf) is further configured to receive an identification of the worker via a code or a voice message sent by the worker through the respective landline telephone (Tel_1, Tel_2, ...,Tel_n) and to transmit a corresponding intelligible voice message in reply to the worker who has made the call.

2. The system of claim 1 wherein the system further comprises a voice recognition application arranged to identify the voice of the worker and its association to the telephone from which the call is made.

3. The system of any of claims 1 to 2 wherein the system further comprises a management program arranged to record the lack of calls from each landline telephone where the worker should have made a call, or their delay, generating a warning that the server transmits to an employer via email and/or SMS.

4. A method for remotely monitoring the presence of workers implemented in a system comprising:
a) a plurality of landline telephones (Tel_1, Tel_2, ..., Tel_n) through which a worker makes a telephone call when the worker enters a respective workplace, and another call at the time of leaving the workplace; wherein each one of the landline telephones (Tel_1, Tel_2, ..., Tel_n) is placed in different workplaces where the workers are working;
b) a switchboard (CTelf) connected to a server via a communication port, wherein the server is configured to function as an internet server, and wherein the switchboard (CTelf) is connected to the plurality of landline telephones (Tel_1, Tel_2, ..., Tel_n) configured to receive the calls made by the workers
wherein the switchboard (CTelf) is an IP programmable switchboard;
the method comprises the steps of:
making a call from a landline telephone (Tel_1, Tel_2, ..., Tel_n);
receiving the call made by the landline telephone (Tel_1, Tel_2, ...,Tel_n) in the switchboard (CTelf);
and recording in a database implemented in the server the calling telephone number, the called telephone number, and the date and time of the call;
the method being **characterized in** comprising the steps:
setting, by the switchboard (CTelf), during the time of a call setup and before completing the call setup, a data traffic under Session Initiation Protocol, SIP, and a dialogue under Real Time Transport Protocol, RTP, and/or Dual-tone Multi-Frequency Protocols, DTMF;
transmitting, by the switchboard (CTelf) a voice message replacing the dialling tone without setting up the call to the landline telephone (Tel_1, Tel_2, ...,Tel_n) that performs the incoming call, wherein said voice message is intelligible to the worker making the call;
receiving, by the switchboard (CTelf), an identification of the worker via a code or a voice message sent by the worker through the corresponding landline telephone (Tel_1, Tel_2, ..., Tel_n); and
transmitting, by the switchboard (CTelf), a corresponding intelligible voice message in reply to the worker who has made the call.

5. The method of claim 4 further comprising a step of identifying the voice of the worker and its association to the telephone from which the call is made.

6. The method of any of claims 4 or 5 wherein the method further comprises the steps of recording the lack of calls from each landline telephone where the worker should have made a call, or their delay, and generating a warning that the server transmits to an employer via email and/or SMS.

## Patentansprüche

1. Ein System zur Fernüberwachung der Anwesenheit von Arbeitnehmern, wobei das System Folgendes umfasst:
a) mehrere Festnetztelefone (Tel_1, Tel_2... Tel_n), über die ein Arbeitnehmer einen Telefonanruf tätigt, wenn der Arbeitnehmer einen entsprechenden Arbeitsplatz betritt, und einen weiteren Anruf zum Zeitpunkt des Verlassens des Arbeitsplatzes; wobei jedes der Festnetztelefone (Tel_1, Tel_2... Tel_n) an verschiedenen Arbeitsplätzen platziert ist, an denen die Arbeitnehmer arbeiten;
b) eine Telefonzentrale (CTelf), die über einen Kommunikationsport mit einem Server verbunden ist, wobei der Server als Internet-Server konfiguriert ist und die Telefonzentrale (CTelf) mit mehreren Festnetztelefonen (Tel_1, Tel_2... Tel_n) verbunden ist konfiguriert, um die vom Arbeiter getätigten Anrufe zu empfangen;
wobei die Telefonzentrale (CTelf) so konfiguriert ist, dass sie die Anrufe in einer Datenbank empfängt und aufzeichnet, die auf dem mit der Telefonzentrale (CTelf) verbundenen Server implementiert ist, die aufgezeichneten Anrufe einschließlich der Telefonnummer, der angerufenen Telefonnummer sowie Datum und Uhrzeit des empfangenen Anrufs;
das System zur Fernüberwachung der Anwesenheit von Mitarbeitern zeichnet sich dadurch aus,
dass die Telefonzentrale (CTelf) eine IP-programmierbare Telefonzentrale ist, die so konfiguriert ist, dass während eines Anrufaufbaus und vor Abschluss des Anrufaufbaus eines eingehenden Anrufs ein Datenverkehr eingestellt wird unter Session Initiation Protocol, SIP, und einen Dialog unter Real Time Transport Protocol, RTP und / oder Dual-Tone Multi-Frequency Protocols, DTMF, wobei die Telefonzentrale (CTelf) ferner so konfiguriert ist, dass sie eine Sprachnachricht überträgt, die den Wählton ersetzt, ohne Einrichten des Anrufs an das Festnetztelefon (Tel_1, Tel_2,..., Tel_n), das den eingehenden Anruf ausführt;
und wobei die Sprachnachricht für den Arbeiter, der den Anruf tätigt, verständlich ist;
und wobei die Telefonzentrale (CTelf) ferner konfiguriert ist, um eine Identifikation des Arbeitnehmers über einen Code oder eine Sprachnachricht zu empfangen, die vom Arbeiter über das entsprechende Festnetztelefon (Tel_1, Tel_2, ..., Tel_n) gesendet wird, und um eine entsprechende verständliche Sprachnachricht zu senden als Antwort auf den Mitarbeiter, der den Anruf getätigt hat.

2. System nach Anspruch 1, wobei das System ferner eine Spracherkennungsanwendung umfasst, die angeordnet ist, um die Stimme des Arbeiters und ihre Zuordnung zu dem Telefon zu identifizieren, von dem aus der Anruf getätigt wird.

3. System nach einem der Ansprüche 1 bis 2, wobei das System ferner ein Verwaltungsprogramm umfasst, das angeordnet ist, um das Fehlen von Anrufen von jedem Festnetztelefon aufzuzeichnen, bei dem der Arbeiter einen Anruf hätte tätigen sollen, oder deren Verzögerung, wodurch eine Warnung erzeugt wird, dass der Server Übermittlung an einen Arbeitgeber per E-Mail und / oder SMS.

4. Verfahren zur Fernüberwachung der Anwesenheit von Arbeitnehmern, die in einem System gemäß einem der Ansprüche 1 bis 3 implementiert sind, umfassend:
a) mehrere Festnetztelefone (Tel_1, Tel_2... Tel_n), über die ein Arbeitnehmer einen Telefonanruf tätigt, wenn der Arbeitnehmer einen entsprechenden Arbeitsplatz betritt, und einen weiteren Anruf zum Zeitpunkt des Verlassens des Arbeitsplatzes; wobei jedes der Festnetztelefone (Tel_1, Tel_2... Tel_n) an verschiedenen Arbeitsplätzen platziert ist, an denen die Arbeitnehmer arbeiten;
b) eine Telefonzentrale (CTelf), die über einen Kommunikationsport mit einem Server verbunden ist, wobei der Server als Internet-Server konfiguriert ist und die Telefonzentrale (CTelf) mit mehreren Festnetztelefonen (Tel_1, Tel_2... Tel_n) verbunden ist konfiguriert, um die vom Arbeiter getätigten Anrufe zu empfangen;
wobei die Schalttafel (CTelf) eine IP-programmierbare Schalttafel ist;
Das Verfahren umfasst die folgenden Schritte:
Tätigen eines Anrufs von einem Festnetztelefon (Tel_1, Tel_2... Tel_n);
den Anruf vom Festnetztelefon (Tel_1, Tel_2... Tel_n) in der Telefonzentrale (CTelf) entgegennehmen;
und Aufzeichnen der anrufenden Telefonnummer, der angerufenen Telefonnummer und des Datums und der Uhrzeit des Anrufs in einer in dem Server implementierten Datenbank;
Das Verfahren umfasst folgende Schritte:
Festlegen eines Datenverkehrs unter Session Session Protocol, SIP und eines Dialogs unter Real Time Transport Protocol durch die Telefonzentrale (CTelf) während der Zeit eines Anrufaufbaus und vor Abschluss des Anrufaufbaus; RTP- und / oder Dual-Tone-Multi-Frequency-Protokolle (DTMF),
die über die Telefonzentrale (CTelf) eine Sprachnachricht senden, die den Wählton ersetzt, ohne den Anruf an das Festnetztelefon (Tel_1, Tel_2,..., Tel_n) zu richten, das das Telefon ausführt eingehender Anruf, wobei die Sprachnachricht für den Arbeiter, der den Anruf tätigt, verständlich ist;
Empfangen einer Identifikation des Arbeitnehmers durch die Telefonzentrale (CTelf) über einen Code oder eine Sprachnachricht, die vom Arbeitnehmer über das entsprechende Festnetztelefon (Tel_1, Tel_2,..., Tel_n)
gesendet wird, Senden einer Telefonzentrale (CTelf), einer entsprechenden verständlichen Stimme Nachricht als Antwort an den Mitarbeiter, der den Anruf getätigt hat.

5. Verfahren nach Anspruch 4, ferner umfassend einen Schritt zum Identifizieren der Stimme des Arbeitnehmers und seiner Zuordnung zu dem Telefon, von dem aus der Anruf getätigt wird.

6. Verfahren nach einem der Ansprüche 4 bis 5, wobei das Verfahren ferner die Schritte des Aufzeichnens des Fehlens von Anrufen von jedem Festnetztelefon, an dem der Arbeitnehmer einen Anruf hätte tätigen sollen, oder ihrer Verzögerung umfasst und das Erzeugen einer Warnung, die der Server an einen Arbeitgeber sendet per E-Mail und / oder SMS.

## Revendications

1. Un système de surveillance à distance de la présence des travailleurs, le système comprenant:
a) une pluralité de téléphones fixes (Tel_1, Tel_2... Tel_n) par l'intermédiaire desquels un travailleur effectue un appel téléphonique lorsque le travailleur entre dans un lieu de travail respectif, et un autre appel au moment de quitter le lieu de travail; dans lequel chacun des téléphones fixes (Tel_1, Tel_2... Tel_n) est placé dans différents lieux de travail où travaillent les travailleurs;
b) un standard (CTelf) connecté à un serveur via un port de communication, dans lequel le serveur est configuré pour fonctionner comme un serveur Internet, et dans lequel le standard (CTelf) est connecté à la pluralité de téléphones fixes (Tel_1, Tel_2... Tel_n) configuré pour recevoir les appels effectués par le travailleur; dans lequel le standard (CTelf) est configuré pour recevoir et enregistrer les appels dans une base de données implémentée dans le serveur connecté au standard (CTelf), les appels enregistrés comprenant le numéro de téléphone, le numéro de téléphone appelé et la date et l'heure de l'appel reçu ;
le système de surveillance à distance de la présence de travailleurs étant **caractérisé en ce que**
le standard (CTelf) est un standard programmable IP qui est configuré pour, pendant le temps d'établissement d'un appel et avant de terminer l'établissement d'appel d'un appel entrant, pour établir un trafic de données sous Session Initiation Protocol, SIP, et un dialogue sous Real Time Transport Protocol, RTP et / ou protocoles multifréquences *dual-tone,* DTMF, dans lequel le standard (CTelf) est en outre configuré pour transmettre un message vocal remplaçant la tonalité de numérotation sans établissement de l'appel vers le téléphone fixe (Tel_1, Tel_2,..., Tel_n) qui effectue l'appel entrant;
et dans lequel ledit message vocal est intelligible pour le travailleur effectuant l'appel;
et dans lequel le standard (CTelf) est en outre configuré pour recevoir une identification du travailleur via un code ou un message vocal envoyé par le travailleur via le téléphone fixe correspondant (Tel_1, Tel_2,..., Tel_n) et pour transmettre un message vocal intelligible correspondant en réponse au travailleur qui a passé l'appel.

2. Système selon la revendication 1 dans lequel le système comprend en outre une application de reconnaissance vocale agencée pour identifier la voix du travailleur et son association avec le téléphone à partir duquel l'appel est effectué.

3. Système selon l'une quelconque des revendications 1 à 2 dans lequel le système comprend en outre un programme de gestion agencé pour enregistrer le manque d'appels de chaque téléphone fixe où le travailleur aurait dû passer un appel, ou leur retard, générant un avertissement que le serveur transmet à un employeur par e-mail et / ou SMS.

4. Procédé de surveillance à distance de la présence de travailleurs mis en œuvre dans un système selon l'une quelconque des revendications 1-3 comprenant:
a) une pluralité de téléphones fixes (Tel_1, Tel_2... Tel_n) par l'intermédiaire desquels un travailleur effectue un appel téléphonique lorsque le travailleur entre dans un lieu de travail respectif, et un autre appel au moment de quitter le lieu de travail; dans lequel chacun des téléphones fixes (Tel_1, Tel_2... Tel_n) est placé dans différents lieux de travail où travaillent les travailleurs;
b) un standard (CTelf) connecté à un serveur via un port de communication, dans lequel le serveur est configuré pour fonctionner comme un serveur Internet, et dans lequel le standard (CTelf) est connecté à la pluralité de téléphones fixes (Tel_1, Tel_2... Tel_n) configuré pour recevoir les appels effectués par le travailleur; dans lequel le tableau (CTelf) est un tableau programmable IP;
le procédé comprend les étapes consistant à:
effectuer un appel depuis un téléphone fixe (Tel_1, Tel_2... Tel_n);
recevoir l'appel effectué par le téléphone fixe (Tel_1, Tel_2... Tel_n) dans le standard (CTelf);
et enregistrer dans une base de données implémentée dans le serveur le numéro de téléphone appelant, le numéro de téléphone appelé et la date et l'heure de l'appel;
le procédé étant **caractérisé en ce qu'**il comprend les étapes:
établissement, par le standard (CTelf), pendant le temps d'établissement d'une communication et avant la fin de l'établissement de l'appel, d'un trafic de données sous Session Initiation Protocol, SIP, et d'un dialogue sous Real Time Transport Protocol, RTP, et / ou protocoles multifréquences *dual-tone,* DTMF,
transmettant par le standard (CTelf) un message vocal remplaçant la tonalité sans configurer l'appel vers le téléphone fixe (Tel_1, Tel_2,..., Tel_n) qui effectue le appel entrant, dans lequel ledit message vocal est intelligible pour le travailleur effectuant l'appel;
réception, par le standard (CTelf), d'une identification du travailleur via un code ou un message vocal envoyé par le travailleur via le téléphone fixe correspondant (Tel_1, Tel_2,..., Tel_n)
émettant, par le standard (CTelf), une voix intelligible correspondante message en réponse au travailleur qui a passé l'appel.

5. Procédé selon la revendication 4 comprenant en outre une étape d'identification de la voix du travailleur et de son association au téléphone à partir duquel l'appel est effectué.

6. Procédé selon l'une quelconque des revendications 4 à 5, dans lequel le procédé comprend en outre les étapes consistant à enregistrer l'absence d'appels de chaque téléphone fixe où le travailleur aurait dû passer un appel, ou leur retard, et à générer un avertissement que le serveur transmet à un employeur par e-mail et / ou SMS.
